(19) **Europäisches Patentamt / European Patent Office / Office européen des brevets**

(11) **EP 2 587 404 B1**

(12) **EUROPÄISCHE PATENTSCHRIFT**

(45) Veröffentlichungstag und Bekanntmachung des Hinweises auf die Patenterteilung:
**01.07.2015 Patentblatt 2015/27**

(51) Int Cl.:
***G06K 7/10*** *(2006.01)*

(21) Anmeldenummer: **12185783.3**

(22) Anmeldetag: **25.09.2012**

(54) **Barcodelesegerät**

Bar code reader

Appareil de lecture d'un code à barres

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.10.2011 DE 102011054931**

(43) Veröffentlichungstag der Anmeldung:
**01.05.2013 Patentblatt 2013/18**

(73) Patentinhaber: **Leuze electronic GmbH + Co. KG 73277 Owen/Teck (DE)**

(72) Erfinder:
• **Clauss, Armin**
  **72622 Nürtingen (DE)**
• **Dümmel, Thomas**
  **72584 Hülben (DE)**
• **Moll, Georg**
  **72655 Altdorf (DE)**

(74) Vertreter: **Ruckh, Rainer Gerhard Jurastrasse 1 73087 Bad Boll (DE)**

(56) Entgegenhaltungen:
**DE-A1-102006 055 992**

EP 2 587 404 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Barcodelesegerät gemäß dem Oberbegriff des Anspruchs 1.

Ein derartiges Barcodelesegerät ist aus der DE 101 01 985 A1 bekannt. Es weist einen Sendelichtstrahlen emittierenden Sender sowie einen Empfangslichtstrahlen empfangenden Empfänger auf. Um einen vorzugsweise flächigen Abtastbereich abzutasten, werden die Sendelichtstrahlen über eine Ablenkeinheit geführt. Dadurch werden die Sendelichtstrahlen periodisch innerhalb des Abtastbereichs geführt, so dass in diesem Abtastbereich angeordnete Gegenstände detektiert werden können. Die Ablenkeinheit besteht aus einem motorisch getriebenen, rotierenden Polygonspiegelrad mit mehreren identischen Spiegelflächen. Die Sendelichtstrahlen und Empfangslichtstrahlen werden jeweils über dieselbe Spiegelfläche abgelenkt. Durch die Rotationsbewegung des Polygonspiegelrads werden innerhalb einer Abtastperiode die Sendelichtstrahlen über die gesamte Breite der jeweiligen Spiegelfläche geführt.

Generell erfolgt zur Detektion von Barcodes eine Auswertung von Empfangssignalen, die während einer Vielzahl von aufeinander folgenden Abtastperioden generiert werden. Um eine fehlerfreie Auswertung der Empfangssignale vornehmen zu können, muss jeweils der Start- und Endzeitpunkt eines Scans, das heißt der während einer Abtastperiode ermittelten Empfangssignale, bekannt und definiert sein.

Um dies zu gewährleisten, werden bei dem Barcodelesegerät der DE 101 01 985 A1 während jeder Periode die Sendelichtstrahlen von der Ablenkeinheit direkt auf eine außerhalb des Abtastbereichs angeordnete Empfangselementanordnung geführt, aus deren Ausgangssignalen ein Triggersignal abgeleitet wird.

Die Empfangselementanordnung ist beispielsweise von einem Empfangselement gebildet, das an einer vorgegebenen Stelle im Barcodelesegerät angeordnet ist. Das Triggersignal wird vorzugsweise durch eine Schwellwertbewertung der am Ausgang des Empfangselements anstehenden Signale gewonnen. Das Triggersignal wird dadurch immer in einer vorgegebenen, festen Ablenkposition der Ablenkeinheit innerhalb jeder Abtastperiode generiert. Dadurch liefert das für jede Spiegelfläche abgeleitete Triggersignal einen Bezugspunkt, aus welchem der Startzeitpunkt und auch das Ende eines Scans bestimmt werden können.

Bei einem idealen Polygonspiegelrad mit exakt identischen Spiegelflächen wird für jede Abtastperiode das Triggersignal auf identische Weise generiert, beispielsweise jeweils exakt am Anfang eines Scans. Da die Spiegelflächen des Polygonspiegelrads aufgrund unvermeidlicher Toleranzen hinsichtlich ihrer Oberflächenbeschaffenheit variieren, variieren entsprechend auch die für die einzelnen Abtastperioden durch die Sendelichtstrahlen an dem Empfangselement generierten Signale hinsichtlich ihrer Anstiegszeiten und Amplituden.

Die aus diesen Signalen durch die Schwellwertbewertung gewonnenen Triggersignale, die für einzelne Spiegelflächen erhalten werden, sind somit mit einem Jitter behaftet. Da die Triggersignale die Startzeitpunkte für die einzelnen Scans definieren, sind auch diese und somit auch die zeitlichen Folgen der Empfangssignale, mit einem entsprechenden Jitter behaftet.

Außerdem können mechanische Toleranzen von Bauteilen zu einem unrunden Lauf des Polygonspiegelrads führen, was ebenfalls zu einem Jitter der Empfangssignale führt.

Ein derartiger Jitter führt insbesondere dann zu Fehlmessungen, wenn ein Barcode nicht mit einem Scan vollständig erfasst werden kann, sondern beispielsweise aufgrund von Detektion oder Verschmutzungen des Barcodes die Barcodeinformation aus Teilinformationen, die bei mehreren aufeinander folgenden Scans erhalten werden, zusammengesetzt werden müssen. Aufgrund des Jitters der Startzeitpunkte der einzelnen Scans wird die Gewinnung der Barcodeinformation aus den Teilinformationen erheblich erschwert oder sogar unmöglich.

Aus der DE 10 2006 055 992 A1 ist ein Verfahren zum Betrieb eines Barcodelesegeräts bekannt. Das hierfür vorgesehene Barcodelesegerät umfasst einen Sendelichtstrahlen empfangenden Sender, einen Empfangslichtstrahlen empfangenden Empfänger, eine Auswerteeinheit zur Auswertung der Empfangssignale des Empfängers sowie eine Ablenkeinheit zur periodischen Ablenkung der Sendelichtstrahlen innerhalb eines Abtastbereichs. Die Ablenkeinheit ist von einem motorisch getriebenen rotierenden Polygonspiegelrad mit mehreren gleichen Spiegelflächen gebildet. Innerhalb einer Abtastperiode werden die Sendelichtstrahlen jeweils über eine Spiegelfläche geführt und überstreichen so den Abtastbereich. Während jeder Periode werden die Sendelichtstrahlen in einer vorgegebenen Ablenkposition auf ein Referenzelement geführt, wodurch ein Triggersignal generiert wird, aus welchem der Startzeitpunkt eines von der Folge der während einer Abtastperiode ermittelten Empfangssignale gebildeten Scans bestimmt wird.

Aus dem Triggersignal werden Korrekturwerte für eine bestimmte, ausgewählte Spiegelfläche abgeleitet, die dann zur Korrektur der Zeitpunkte der Empfangssignale der Scans für alle anderen Spiegelflächen des Polygonspiegelrads verwendet werden. Da somit die Korrekturwerte immer aus Signalen abgeleitet sind, die durch Führen der Sendelichtstrahlen über jeweils dieselbe Stelle derselben Spiegelfläche des Polygonspiegelrads erhalten werden, sind diese Korrekturwerte nicht mit einem Jitter behaftet. Somit können die Startsignale für Scans, die aus Triggersignalen, die durch Führen der Sendelichtstrahlen über unterschiedliche Spiegelflächen des Polygonspiegelrads gewonnen werden, abgeleitet werden und daher aufgrund von Toleranzen der Spiegelflächen mit einem Jitter behaftet sind, durch die Korrekturwerte derart renormiert werden, dass die Jitter systematisch eliminiert werden.

Es hat sich jedoch gezeigt, dass trotz der Eliminierung des Jitters die mit derartig ausgebildeten Bar-

codeleseräten erzielbare Nachweissicherheit noch nicht zufriedenstellend ist. Insbesondere wurde festgestellt, dass bei einer Serienfertigung gleicher Barcodelesegeräte die Messsicherheit der einzelnen Geräte relativ stark schwankt.

Der Erfindung liegt die Aufgabe zugrunde, ein Barcodelesegerät der eingangs genannten Art so auszubilden, dass dessen Messsicherheit reproduzierbar weiter erhöht ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Barcodelesegerät umfasst einen Sendelichtstrahlen emittierenden Sender, einen Empfangslichtstrahlen empfanden Empfänger, eine Auswerteeinheit zur Auswertung der Empfangssignale des Empfängers und eine Ablenkeinheit zur periodischen Ablenkung der Sendelichtstrahlen innerhalb eines Abtastbereichs. Die Ablenkeinheit weist ein motorisch getriebenes Polygonspiegelrad mit einer Anzahl von Spiegelflächen auf, wobei innerhalb einer Abtastperiode die Sendelichtstrahlen jeweils über eine Spiegelfläche geführt sind und so den Abtastbereich überstreichen. Mit einem Referenzelement wird mittels dessen ein Triggersignal generiert, durch welches ein Referenzzeitpunkt für eine Folge der während einer Abtastperiode ermittelten Empfangssignale gebildeten Scans vorgegeben ist. Mittels eines Markierungszuordnungselements ist eine Markierung konstruktiv einer bestimmten Spiegelfläche zugeordnet. Durch Erfassung der Markierung wird mittels eines Sensorelements ein Markierungssignal für diese Spiegelfläche generiert. Mittels dessen werden die Empfangssignale des Scans der weiteren Spiegelfläche referenziert.

Der Erfindung liegt die Erkenntnis zugrunde, dass ein wesentlicher Faktor zur Erzielung einer hohen Messsicherheit darin besteht, dass die Scans einer Abtastperiode stets in der gleichen Reihenfolge ausgewertet werden, wobei es wesentlich ist, dass die erste Spiegelfläche der Reihenfolge, insbesondere bei allen Geräten einer Serie, stets dieselbe ist.

Die Einhaltung dieser Reihenfolge ist besonders dann wichtig, wenn beispielsweise mit den einzelnen Scans in einer Abtastperiode nur Teile eines Barcodes detektiert werden und dann zur Detektion eines Barcodes die an einzelnen Scans gewonnenen Teilinformationen eines Barcodes zusammengesetzt werden. Ein weiteres Beispiel ist die Ausbildung einer Ablenkeinheit mit einem Rasterpolygonspiegelrad, dessen einzelne Spiegelflächen unterschiedliche Neigungswinkel aufweisen, so dass mit diesen mehrere, räumlich versetzte Abtastlinien generiert werden.

Das Polygonspiegelrad eines Barcodelesegeräts besteht vorzugsweise aus einem Kunstoffspritzteil. Dieses Polygonspiegelrad wird mittels eines Werkzeugs reproduzierbar stets in der gleichen Weise für den Einsatz in den jeweiligen Barcodelesegeräten hergestellt, das heißt die einzelnen Spiegelflächen eines Polygonspiegelrads sind zwar nicht exakt identisch ausgebildet, jedoch sind diese Unterschiede bei allen mit demselben Werkzeug hergestellten Polygonspiegelrädern gleich.

Bei dem aus der DE 10 2006 055 992 A1 bekannten Barcodelesegerät wird eine Markierung willkürlich auf oder an irgendeiner Spiegelfläche des Polygonspiegelrads aufgebracht, was zur Kalibrierung der Empfangssignale der einzelnen Scans zwar ausreicht. Jedoch ergibt sich daraus als Nachteil, dass diese Markierung keinen definierten Bezugspunkt für den Beginn der Reihenfolge der Scans einer Abtastperiode definiert. Die Markierungen für mehrere Barcodelesegeräte einer Serie kennzeichnen nie dieselbe Spiegelfläche sondern zufällig ausgewählte Spiegelflächen.

Die dadurch bedingte Reduzierung der Nachweissicherheit des Barcodelesegeräts wird erfindungsgemäß systematisch eliminiert. Durch das Markierungszuordnungselement ist nämlich fertigungstechnisch eindeutig gewährleistet, dass die Markierung für alle Geräte einer Serie stets exakt an derselben Spiegelfläche angeordnet ist. Mit anderen Worten bildet das Markierungszuordnungselement eine konstruktive Zwangsbedingung, mit der die Platzierung der Markierung immer an derselben Spiegelfläche erzwungen wird.

Durch diese Maßnahme wird die Nachweissicherheit des erfindungsgemäßen Barcodelesegeräts erheblich erhöht.

Dies beruht darauf, dass die Software in der Auswerteeinheit zur Erfassung der Barcodes ausgehend von einer Start-Spiegelfläche die einzelnen Scans für die Spiegelflächen immer in derselben Reihenfolge auswertet. Durch das Markierungszuordnungselement ist nun gewährleistet, dass es sich bei der Start-Spiegelfläche physikalisch immer um dieselbe Spiegelfläche des Polygonspiegelrads handelt. Damit werden die Nachweissicherheit reduzierenden Messwertschwankungen, die sich durch eine unterschiedliche Auswahl von Start-Spiegelflächen ergeben würden, systematisch eliminiert.

Die Nachweissicherheit wird besonders für Barcodelesegeräte signifikant gesteigert, bei welchen die Reihenfolge der einzelnen Scans ein wesentliches Element der Signalauswertung darstellt.

Ein erstes Beispiel hierfür ist ein Barcodelesegerät, bei welchem in den einzelnen Scans nur Fragmente eines Barcodes erfasst werden, die dann mittels der Software in der Auswerteeinheit zusammengesetzt werden müssen, um den Barcode zu erfassen.

Ein weiteres Beispiel hierfür ist ein Barcodelesegerät, das ein Rasterpolygonspiegelrad als Ablenkeinheit aufweist. Dieses Rasterpolygonspiegelrad weist Triggersignale mit unterschiedlichen Neigungswinkeln auf, wodurch mit den über die einzelnen Spiegelflächen geführten Sendelichtstrahlen 3 unterschiedlich orientierte Abtastlinien erzeugt werden.

Gemäß einer konstruktiv vorteilhaften Ausgestaltung ist die Markierung Bestandteil des Markierungszuordnungselements.

Da es sich bei dem Markierungszuordnungselement und der Markierung nur um ein Teil handelt, kann dieses fertigungstechnisch einfach hergestellt und zudem schnell montiert werden.

Ein Beispiel hierfür ist die spezifische Ausbildung eines Markierungszuordnungselements in Form eines Blechteils, das auf das Polygonspiegelrad aufgesetzt wird. Die Funktion als Markierungszuordnungselement erfüllt das Blechteil dadurch, dass es asymmetrisch angeordnete Befestigungsmittel zur Befestigung am Polygonspiegelrad aufweist, so dass das Blechteil immer nur in einer bestimmten Orientierung am Polygonspiegelrad montiert werden kann. Damit ist gewährleistet, dass bei allen mit einem bestimmten Werkzeug hergestellten Polygonspiegelrädern einer Serie die Markierung am Markierungszuordnungselement immer derselben Spiegelfläche zugeordnet ist.

Generell kann das Markierungszuordnungselement und die vorzugsweise einstückig mit diesem ausgebildete Markierung sogar Bestandteil des Polygonspiegelrads selbst sein. Das Markierungszuordnungselement kann beispielsweise als Stift oder Fahne am Polygonspiegelrad ausgebildet sein.

Generell können das Markierungszuordnungselement und die Markierung auch aus separaten Teilen bestehen. Für den Fall, dass das Markierungszuordnungselement im Polygonspiegelrad integriert ist, kann das Markierungszuordnungselement von einer Bohrung gebildet sein, in welche eine als Stift ausgebildete Markierung eingesteckt werden kann.

Generell kann die Markierung auch als Bedruckung oder Aufkleber ausgebildet sein.

Generell können die Markierungen verschiedenartige Geometrien aufweisen und aus unterschiedlichen Materialien bestehen. Das Sensorelement ist vorzugsweise an die Ausbildung der Markierung angepasst. Das Sensorelement kann dabei von einem optischen Sensor, einem induktiven Sensor, einem Hallsensor und dergleichen gebildet sein.

Das Markierungssignal stellt im Allgemeinen ein von den Triggersignalen getrenntes Signal dar. Generell kann jedoch auch das Markierungssignal Bestandteil des Triggersignals sein, beispielsweise derart, dass ein Triggersignal durch die Markierung länger oder kürzer ist als die anderen Triggersignale. Durch die Integration des Markierungssignals in ein Triggersignal kann auch der konstruktive Aufwand des Barcodelesegeräts reduziert werden, beispielsweise kann ein Sensorelement eingesetzt werden, um die Triggersignale und auch das Markierungselement zu generieren.

Besonders vorteilhaft wird nicht nur mittels des Markierungssignals eine eindeutige Reihenfolge der einzelnen Scans bestimmt, sondern auch mittels des Markierungssignals die Empfangssignale der Scans der weiteren Spiegelflächen kalibriert.

Dadurch wird eine besonders hohe Nachweissicherheit des Barcodelesegeräts erhalten.

Die Erfindung wird im Nachstehenden anhand der Zeichnungen erläutert. Es zeigen:

Figur 1: Schematische Darstellung eines Ausführungsbeispiels eines Barcodelesegeräts.

Figur 1a: Draufsicht auf ein Polygonspiegelrad des Barcodelesegeräts gemäß Figur 1.

Figur 1b: Draufsicht auf ein Markierungszuordnungselement für das Polygonspiegelrad gemäß Figur 1b.

Figur 1c: Seitenansicht des Polygonspiegelrads gemäß Figur 1a mit darauf aufsitzendem Markierungszuordnungselement sowie einem zugeordneten Sensorelement.

Figur 2: Zeitdiagramme von Triggersignalen, Empfangssignalen sowie eines Markierungssignals für das Barcodelesegerät gemäß Figur 1.

Figur 3: Schematische Darstellung von unkorrigierten Empfangssignalen, die für verschiedene Abtastungen mit dem Barcodelesegerät gemäß Figur 1 erhalten werden.

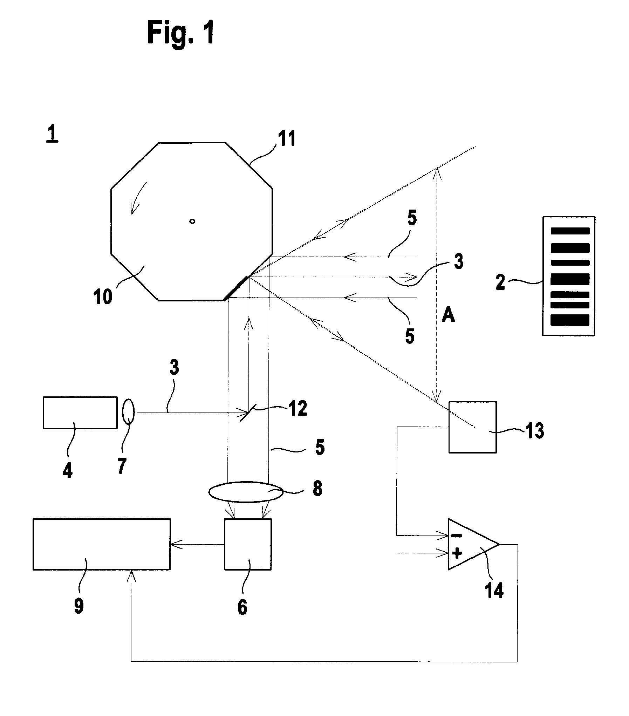

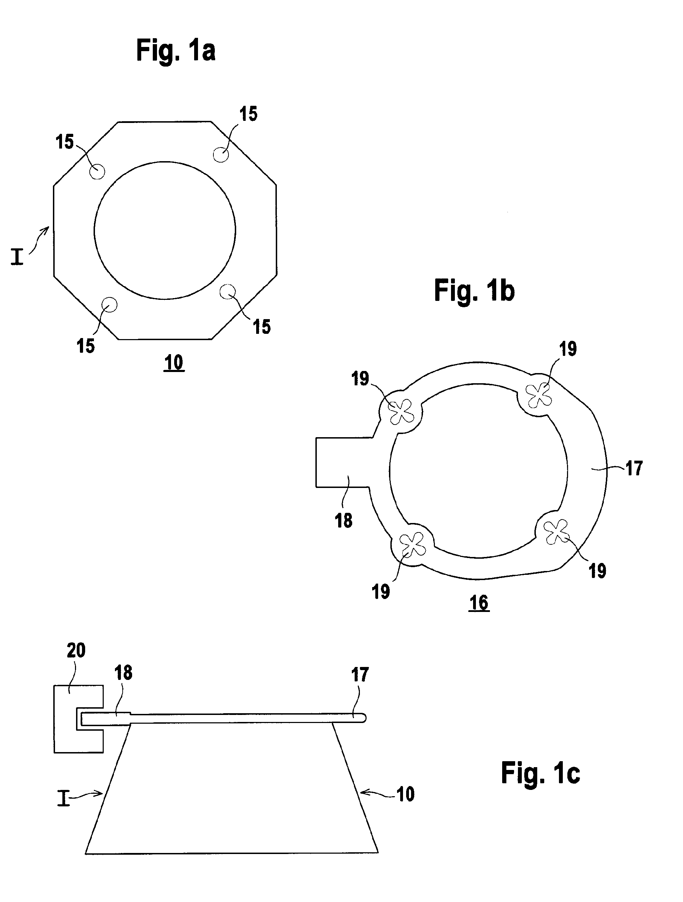

Figur 1 zeigt ein Ausführungsbeispiel eines Barcodelesegeräts 1 zum Erfassen von Barcodes 2 innerhalb eines Abtastbereichs A.

Die Barcodes 2 weisen eine Folge von hellen und dunklen Linienelementen auf. Vorzugsweise bestehen die Barcodes 2 aus einer Folge von schwarzen und weißen Linienelementen.

Die Barcodes 2 werden innerhalb des Abtastbereichs A von dem Barcodelesegerät 1 periodisch abgetastet. Hierzu weist das Barcodelesegerät 1 einen Sendelichtstrahlen 3 emittierenden Sender 4 und einen Empfangslichtstrahlen 5 empfangenden Empfänger 6 auf. Der Sender 4 ist von einer Laserdiode gebildet, der Empfänger 6 besteht aus einer Fotodiode oder dergleichen. Zur Strahlformung der Sendelichtstrahlen 3 ist dem Sender 4 eine Sendeoptik 7 nachgeordnet. Dem Empfänger 6 ist eine Empfangsoptik 8 vorgeordnet, mittels derer die Empfangslichtstrahlen 5 auf den Empfänger 6 fokussiert werden.

Der Empfänger 6 ist an eine Auswerteeinheit 9 angeschlossen. Die Auswerteeinheit 9 ist von einem Mikrocontroller oder dergleichen gebildet.

Zur Erfassung der Barcodes 2 werden die Sendelichtstrahlen 3 periodisch innerhalb des Abtastbereichs geführt. Hierzu ist eine Ablenkeinheit vorgesehen, über welche sowohl die Sendelichtstrahlen 3 als auch die Empfangslichtstrahlen 5 geführt sind.

Die Ablenkeinheit ist von einem motorisch getriebenen, rotierenden Polygonspiegelrad 10 gebildet. Das Polygonspiegelrad 10 weist mehrere identische Spiegelflächen 11 auf, wobei im vorliegenden Beispiel acht derartiger Spiegelflächen 11 vorgesehen sind. Generell kann das Polygonspiegelrad 10 auch eine andere Anzahl von Spiegelflächen 11 aufweisen.

Die Sende- 3 und Empfangslichtstrahlen 5 werden jeweils über dieselbe Spiegelfläche 11 des Polygonspiegelrads 10 geführt. Dabei verlaufen die Strahlachsen der auf das Polygonspiegelrad 10 auftreffenden Sendelichtstrahlen 3 und die am Polygonspiegelrad 10 reflektierten Empfangslichtstrahlen 5 koaxial zueinander. Die koaxiale Strahlführung der Sende- 3 und Empfangslichtstrahlen 5 in diesem Bereich wird beispielsweise mittels eines Strahlteilers 12, der wie in Figur 1 dargestellt die Sendelichtstrahlen 3 ablenkt, erreicht. Die Empfangslichtstrahlen 5, die am Polygonspiegelrad 10 reflektiert werden, werden am Strahlteiler 12 vorbei zum Empfänger 6 geführt.

Durch die Drehbewegung des Polygonspiegelrads 10 werden die Sendelichtstrahlen 3 periodisch innerhalb eines Winkelbereichs abgelenkt, welcher den Abtastbereich A bildet. Die Größe des Winkelbereichs ist durch die Anzahl der Spiegelflächen 11 des Polygonspiegelrads 10 vorgegeben.

Mit den Sendelichtstrahlen 3 wird ein im Abtastbereich angeordneter Barcode 2 periodisch abgetastet. Die am Barcode 2 reflektierten Empfangslichtstrahlen 5 weisen entsprechend dem Muster der Linienelemente des Barcodes 2 eine Amplitudenmodulation auf. Dementsprechend weisen auch die Empfangssignale am Ausgang des Empfängers 6 anstehenden, durch die Empfangslichtstrahlen 5 generierten Empfangssignale eine entsprechende Amplitudenmodulation auf. Diese Amplitudenmodulation der Empfangssignale wird in der Auswerteeinheit 9 zur Dekodierung des jeweiligen Barcodes 2 ausgewertet. Dabei werden in der Auswerteeinheit 9 jeweils die während einer Abtastperiode registrierten Empfangssignale zusammen ausgewertet.

Damit die während der Abtastung des Barcodes 2 registrierten Empfangssignale eindeutig den einzelnen Abtastperioden zugeordnet werden können, sind entsprechend Triggersignale erforderlich.

Diese Triggersignale werden während jeder Abtastperiode in jeweils derselben Winkelstellung der Spiegelfläche 11, über welche die Sendelichtstrahlen 3 während der jeweiligen Abtastperiode geführt sind, generiert. Anhand dieser Triggersignale ist feststellbar, wann eine Abtastperiode beginnt, bzw. wann diese Abtastperiode endet.

Zur Generierung der Triggersignale ist als Referenzelement ein Empfangselement 13 vorgesehen, welches im vorliegenden Ausführungsbeispiel von einem Fotoelement gebildet ist. Das Signal am Ausgang des Empfangselements 13 wird zur Generierung eines binären Triggersignals mit einem Schwellwert bewertet, der in einem Komparator 14 erzeugt wird, dass an die Auswerteeinheit 9 angeschlossen ist.

Anstelle des Empfangselements 13 kann dort ein lichtreflektierendes Element vorgesehen sein, welches einen vorgegebenen Anteil der Sendelichtstrahlen 3 zum Empfänger 6 reflektiert.

Das Empfangselement 13 ist im vorliegenden Fall so angeordnet, dass die Sendelichtstrahlen 3 jeweils am Anfang einer Abtastperiode auf das Empfangselement 13 treffen und dann das Triggersignal generieren. Dementsprechend bilden die fallenden Flanken der einzelnen Triggersignale die Startzeitpunkte einer Abtastung und damit eines Scans, der innerhalb einer Abtastperiode durchgeführt wird. Generell kann das Empfangselement 13 auch so angeordnet sein, dass die Sendelichtstrahlen 3 am Anfang einer Abtastperiode auf das Empfangselement 13 auftreffen.

Figur 1a zeigt eine Draufsicht auf die Oberseite des Polygonspiegelrads 10 des Barcodelesegeräts 1 gemäß Figur 1. Das Polygonspiegelrad 10 besteht aus einem Kunststoffspritzgußteil, das in einem Werkzeug durch einen Spritzvorgang hergestellt wird. Da alle Polygonspiegelräder einer Serie in ein und demselben Werkzeug hergestellt werden, weisen diese exakt dieselben Geometrien auf. Dies bedeutet, dass die einzelnen Spiegelflächen 11 des Polygonspiegelrads 10 durch Toleranzen des Werkzeugs leicht unterschiedlich ausgebildet sind. Diese Unterschiede sind für alle mit dem Werkzeug hergestellten Polygonspiegelräder identisch ausgebildet.

Von der Oberseite des Polygonspiegelrads 10 stehen vier Stifte 15 hervor, die asymmetrisch über den Umfang des Polygonspiegelrads 10 verteilt sind.

Figur 1b zeigt ein Markierungszuordnungselement in Form eines Blechteils. Das im Wesentlichen kreisringförmige Blechteil weist an einer Seite eine Auswölbung 17 auf und an der anderen Seite ein rechteckförmiges Plattenelement, das eine Markierung 18 bildet. Die Auswölbung 17 bildet einen Masseausgleich und verhindert somit eine Unwucht. Das Blechteil weist weiter vier Ausnehmungen 19 auf, die wie die Stifte 15 asymmetrisch über die Umfangsrichtung verteilt sind. Diese Ausnehmungen 19 bilden Markierungszuordnungen für die Markierung 18, denn die Ausnehmungen 19 können nur in einer bestimmten Anordnung auf die Stifte 15 des Polygonspiegelrads 10 aufgesteckt werden. Dadurch ist gewährleistet, dass das Markierungszuordnungselement 16 immer nur so auf dem Polygonspiegelrad 10 aufgesetzt werden kann, dass die Markierung 18 immer derselben Spiegelfläche 11 (in Figur 1a mit I bezeichnet) zugeordnet ist.

Figur 1c zeigt das auf das Polygonspiegelrad 10 aufgesetzte Markierungszuordnungselement 16 sowie ein ortsfest im Barcodelesegerät 1 angeordnetes Sensorelement in Form einer Gabellichtschranke 20. Die Gabellichtschranke 20 ist so angeordnet, dass bei der Rotation des Polygonspiegelrads 10 die Markierung 18, nicht jedoch die Auswölbung 17 erfasst wird.

Bei der Erfassung der Markierung 18 generiert die Gabellichtschranke 20 ein Markierungssignal, das in die Auswerteeinheit 9 eingelesen wird. Das Markierungssignal kennzeichnet eindeutig die mit I bezeichnete Spiegelfläche 11. Da durch das Markierungszuordnungselement 16 gewährleistet ist, dass für alle Polygonspiegelräder, die mit dem Werkzeug hergestellt werden, immer dieselbe Spiegelfläche 11 mit der Markierung 18 gekennzeichnet wird, kennzeichnet auch das Markierungssignal immer dieselbe Spiegelfläche 11.

In der Auswerteeinheit 9 erfolgt die Auswertung der einzelnen Scans der einzelnen Abtastperioden immer in derselben Reihenfolge, wobei immer dieselbe Spiegelfläche 11, die durch die Markierung 18 gekennzeichnet ist, die erste Spiegelfläche 11 innerhalb der Reihenfolge ist.

Durch das Markierungszuordnungselement 16 ist gewährleistet, dass es sich für alle mit dem Werkzeug hergestellten Polygonspiegelräder immer physikalisch um dieselbe Spiegelfläche 11 handelt. Damit werden Beeinträchtigungen der Nachweissicherheit durch zufällig ausgewählte Start-Spiegelflächen einer Reihenfolge und dadurch bedingte Messwertschwankungen prinzipiell ausgeschlossen.

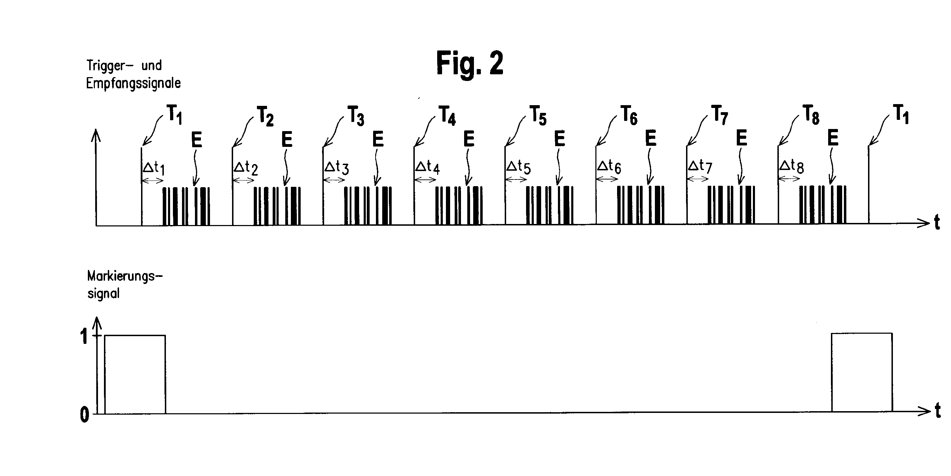

Figur 2 zeigt schematisch den Zeitablauf der Signalauswertung für das Barcodelesegerät 1 gemäß den Figuren 1, 1a bis c.

Figur 2 zeigt dabei die Triggersignale $T_1$ - $T_8$, die bei Führen der Sendelichtstrahlen 3 über die einzelnen Spiegelflächen 11 auf das Empfangselement 13 generiert werden. Entsprechend der Rotationsbewegung des Polygonspiegelrads 10 werden periodisch nacheinander entsprechend der Anzahl der Spiegelflächen 11 acht Triggersignale $T_1$ - $T_8$ generiert. Die Zeitpunkte der fallenden Flanken der Triggersignale $T_1$ - $T_8$ definieren jeweils den Anfang einer Abtastperiode und bilden damit so genannte SOS(Start of Scan)-Signale. Während eines jeweils mit einem Triggersignal beginnenden Scans werden die von einem Barcode 2 stammenden, in Figur 2 mit E bezeichneten Empfangssignale erhalten.

Da bei der Generierung der Triggersignale $T_1$ - $T_8$ die Sendelichtstrahlen 3 jeweils über die verschiedenen Spiegelflächen 11 des Polygonspiegelrads 10 geführt sind, und diese Spiegelflächen 11 aufgrund unvermeidlicher Toleranzen Unterschiede hinsichtlich ihrer Oberflächenbeschaffenheiten aufweisen, variieren die Signale des Empfangselements 13, die durch die über die verschiedenen Spiegelflächen 11 geführten Sendelichtstrahlen 3 generiert werden, hinsichtlich ihrer Signalformen. Dementsprechend variieren auch die aus den Signalen des Empfangselements 13 durch die Schwellwertbewertung gewonnenen Triggersignale $T_1$ - $T_8$.

Dies führt zu einem Jitter der SOS-Signale $T_1$ - $T_8$, das heißt diese SOS-Signale folgen nicht in exakt identischen Zeitintervallen aufeinander.

Dementsprechend sind auch die zeitlichen Folgen der Empfangssignale E, die während eines Scans innerhalb einer Abtastperiode erhalten werden, mit einem solchen Jitter behaftet.

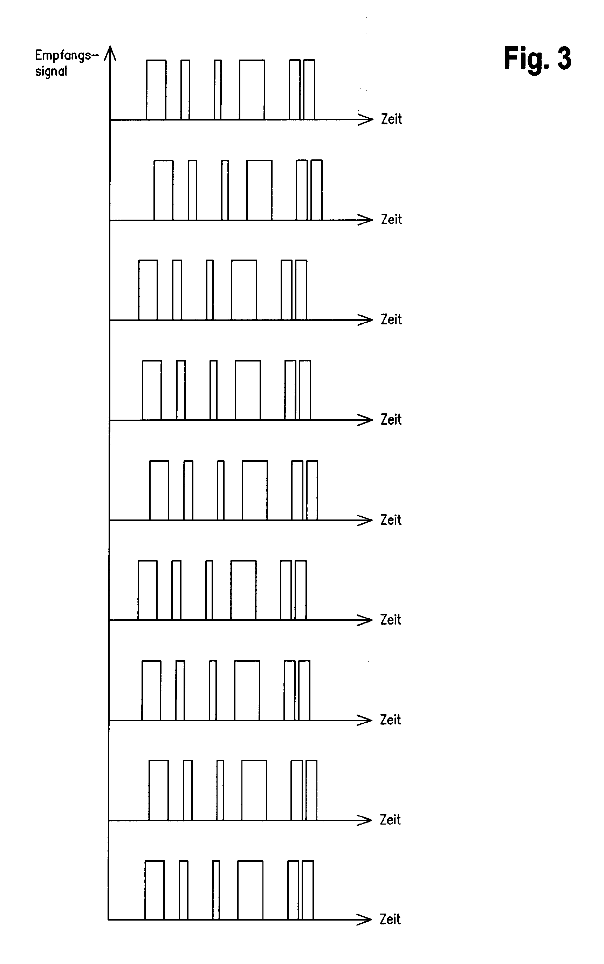

Dies ist schematisch in Figur 3 dargestellt. Die Triggersignale werden zur Triggerung des Einlesevorgangs der Empfangssignale in die Auswerteeinheit 9 verwendet, wobei die Empfangssignale bevorzugt über einen Analog-DigitalWandler in die Auswerteeinheit 9 eingelesen werden. Wie aus Figur 3 ersichtlich, werden durch diese Triggerung jeweils Scans in Form von Folgen von Empfangssignalen innerhalb einer Abtastperiode erhalten, wobei der Startzeitpunkt jedes Scans durch ein SOS-Signal $T_1$ - $T_8$ definiert ist. Da diese SOS-Signale mit einem Jitter behaftet sind, sind die Empfangssignale der einzelnen Abtastperiode entsprechend gegeneinander verschoben, wie aus Figur 3 ersichtlich ist. Eine derartige Verschiebung führt insbesondere dann zu Fehldetektionen, wenn die während der einzelnen Abtastperioden erhaltenen Empfangssignale nur Teilinformationen eines Barcodes 2 enthalten, so dass diese Teilinformationen aus unterschiedlichen Scans zur Dekodierung eines Barcodes 2 zusammengesetzt werden müssen.

Zur Elimination derartiger Störeinflüsse werden die Startzeitpunkte des einzelnen Scans und damit die Zeitverläufe der Empfangssignale mit Korrekturwerten korrigiert.

Diese Korrekturwerte werden von Signalen des Empfangselements 13 abgeleitet, die von Sendelicht-strahlen 3 generiert werden, die immer über dieselbe Spiegelfläche 11 des Polygonspiegelrads 10 geführt sind. Diese ausgewählte Spiegelfläche 11 wird anhand der Markierung 18 gemäß Figur 1b gekennzeichnet damit eindeutig identifiziert.

Mit der Markierung 18 wird das im unteren Diagramm von Figur 2 dargestellte Markierungssignal generiert. Die ausgewählte Spiegelfläche 11 ist im vorliegenden Fall von der ersten Spiegelfläche 11 gebildet, die das erste Triggersignal $T_1$ generiert. Das Markierungssignal ist so ausgebildet, dass es während der gesamten Dauer des Triggersignals $T_1$ ansteht, jedoch nicht dann ansteht, wenn die übrigen Triggersignale $T_2$ - $T_8$ anstehen.

Somit können durch das Markierungssignal, das in der Auswerteeinheit 9 ausgewertet wird, die Triggersignale $T_1$, die durch die Führung der Sendelichtstrahlen 3 über die erste, das heißt ausgewählte Spiegelfläche 11 geführt werden, eindeutig identifiziert werden.

In einem Kalibriervorgang, der vorzugsweise vor Inbetriebnahme des Barcodelesegeräts 1 erfolgt, werden wie im oberen Diagramm dargestellt, die Triggersignale $T_1$ für die durch das Markierungssignal gekennzeichnete ausgewählte Spiegelfläche 11 zur Ermittlung von Korrekturwerten herangezogen. Hierzu wird zunächst, wie im oberen Diagramm von Figur 2 dargestellt, als Bezugsgröße die Zeitdifferenz $\Delta t_1$ zwischen dem Triggersignal $T_1$ und dem ersten Empfangssignal des Scans für die ausgewählte Spiegelfläche 11 gebildet.

Die Korrekturwerte $K_n$ ($n = 2, ... 8$) werden dann gemäß der Beziehung

$$K_n = \Delta t_n - \Delta t_1 \ (n = 2, \ldots 8)$$

berechnet und dauerhaft gespeichert.

Prinzipiell kann diese Art der Korrekturwertermittlung mehrfach über mehrere Umdrehungen des Polygonspiegelrads 10 durchgeführt werden, so dass dann eine Mittelung der Korrekturwerte $K_n$ für die einzelnen Umdrehungen erfolgen kann.

Im nachfolgenden Arbeitsbetrieb des Barcodelesegeräts 1 werden dann die Startzeitpunkte oder die Zeitpunkte der einzelnen Empfangssignale der einzelnen Scans innerhalb der einzelnen Abtastperioden so renormiert, dass diese um die jeweiligen Korrekturwerte verschoben werden. Hiermit kann der Jitter der SOS-Signale systematisch eliminiert werden, da die Korrekturwerte aus Signalen des Empfangselements 13 abgeleitet sind, die immer von über dieselbe, nämlich die ausgewählte Spiegelfläche 11, geführten Sendelichtstrahlen 3 generiert werden.

Bezugszeichenliste

(1)     Barcodelesegerät
(2)     Barcode
(3)     Sendelichtstrahlen
(4)     Sender
(5)     Empfangslichtstrahlen
(6)     Empfänger
(7)     Sendeoptik
(8)     Empfangsoptik
(9)     Auswerteeinheit
(10)    Polygonspiegelrad
(11)    Spiegelfläche
(12)    Strahlteiler
(13)    Empfangselement
(14)    Komparator
(15)    Stifte
(16)    Markierungszuordnungselement
(17)    Auswölbung
(18)    Markierung
(19)    Ausnehmung
(20)    Gabellichtschranke

**Patentansprüche**

1.  Barcodelesegerät (1) mit einem Sendelichtstrahlen (3) emittierenden Sender, einem Empfangslichtstrahlen (5) empfangenden Empfänger (6), einer Auswerteeinheit (9) zur Auswertung der Empfangssignale des Empfängers (6), einer Ablenkeinheit zur periodischen Ablenkung der Sendelichtstrahlen (3) innerhalb eines Abtastbereichs, wobei die Ablenkeinheit ein motorisch getriebenes Polygonspiegelrad (10) mit einer Anzahl von Spiegelflächen (11) aufweist, wobei innerhalb einer Abtastperiode die Sendelichtstrahlen (3) jeweils über eine Spiegelfläche (11) geführt sind und so den Abtastbereich überstreichen, mit einem Referenzelement, mittels dessen ein Triggersignal generiert wird, durch welches ein Referenzzeitpunkt für eine Folge der während einer Abtastperiode ermittelten Empfangssignale gebildeten Scans vorgegeben ist, **dadurch gekennzeichnet, dass** ein Markierungszuordnungselement (16) vorgesehen ist, welches eine konstruktive Zwangsbedingung derart bildet, dass eine Markierung (18) konstruktiv einer bestimmten Spiegelfläche (11) zugeordnet ist, und dass durch Erfassung der Markierung (18) mittels eines Sensorelements ein Markierungssignal für diese Spiegelfläche (11) generiert wird, mittels dessen die Empfangssignale des Scans der weiteren Spiegelflächen (11) referenziert werden.

2.  Barcodelesegerät nach Anspruch 1, **dadurch gekennzeichnet, dass** das Markierungszuordnungselement (16) Bestandteil des Polygonspiegelrads (10) ist.

3.  Barcodelesegerät nach Anspruch 1, **dadurch gekennzeichnet, dass** das Markierungszuordnungselement (16) Bestandteil eines dem Polygonspiegelrad (10) konstruktiv zugeordneten Bauteils ist.

4.  Barcodelesegerät nach einem der Ansprüche 1 bis 3, **dadurch gekennzeichnet, dass** das die Markierung (18) Bestandteil des Markierungszuordnungselements (16) ist.

5.  Barcodelesegerät nach einem der Ansprüche 1 bis 3, **dadurch gekennzeichnet, dass** die Markierung (18) und das Markierungszuordnungselement (16) separate Teile bilden.

6.  Barcodelesegerät nach einem der Ansprüche 1 bis 5, **dadurch gekennzeichnet, dass** das Markierungssignal Bestandteil des Triggersignals ist.

7.  Barcodelesegerät nach einem der Ansprüche 1 bis 6, **dadurch gekennzeichnet, dass** mittels des Markierungssignals die Empfangssignale der Scans der weiteren Spiegelflächen (11) kalibrierbar sind.

8.  Barcodelesegerät nach einem der Ansprüche 1 bis 7, **dadurch gekennzeichnet, dass** mittels des Markierungssignals eine eindeutige Reihenfolge der einzelnen Scans bestimmt ist.

9.  Barcodelesegerät nach einem der Ansprüche 1 bis 8, **dadurch gekennzeichnet, dass** dieses ein Rasterpolygonspiegelrad (10) aufweist.

**Claims**

1.  Barcode reader (1) comprising a transmitter emitting transmitted light beams (3), a receiver (6) receiving received light beams (5), an evaluating unit (9) for evaluating received signals of the receiver (6), a deflecting unit for periodic deflection of the transmitted light beams (3) within a scanning region, wherein the deflecting unit comprises a motor-driven polygon mirror wheel (10) with a plurality of mirror surfaces (11), wherein within a scanning period the transmitted light beams (3) are each guided over a mirror surface (11) and thus scan the scanning region, and a reference element by means of which a trigger signal is generated, by which a reference time point for scans formed by a sequence of the received signals detected during a scanning period is predetermined, **characterised in that** a marking association element (16) is provided which forms a constructional compulsory condition such that a marking (18) is constructionally associated with a specific mirror surface (11) and that through detection of the marking (18) by means of a sensor element there is generated for this mirror surface (11) a marking signal by means of which the received signals of the scan of the further mirror surfaces (11) are referenced.

2. Barcode reader according to claim 1, **characterised in that** the marking association element (16) is a component of the polygon mirror wheel (10).

3. Barcode reader according to claim 1, **characterised in that** the marking association element (16) is a component part of a component constructionally associated with the polygon mirror wheel (10).

4. Barcode reader according to any one of claims 1 to 3, **characterised in that** the marking (18) is a component part of the marking association element (16).

5. Barcode reader according to any one of claims 1 to 3, **characterised in that** the marking (18) and the marking association element (16) form separate parts.

6. Barcode reader according to any one of claims 1 to 5, **characterised in that** the marking signal is a constituent of the trigger signal.

7. Barcode reader according to any one of claims 1 to 6, **characterised in that** the received signals of the scans of the further mirror surfaces (11) can be calibrated by means of the marking signal.

8. Barcode reader according to any one of claims 1 to 7, **characterised in that** a unique sequence of the individual scans is determined by means of the marking signal.

9. Barcode reader according to any one of claims 1 to 8, **characterised in that** this comprises a raster-scanning polygon mirror wheel (10).

**Revendications**

1. Lecteur de code-barres (1) avec un émetteur émettant des rayons lumineux d'émission (3), un récepteur (6) recevant des rayons lumineux de réception (5), une unité d'évaluation (9) pour évaluer les signaux de réception du récepteur (6), une unité de déviation pour dévier périodiquement les rayons lumineux d'émission (3) à l'intérieur d'une zone de balayage, l'unité de déviation présentant une roue à miroir polygonal (10) entraînée par moteur comportant un certain nombre de faces réfléchissantes (11), les rayons lumineux d'émission (3) étant guidés chaque fois par une face réfléchissante (11) pendant une période de balayage et parcourant ainsi la zone de balayage, avec un élément de référence au moyen duquel un signal de déclenchement est généré, par lequel un instant de référence pour une suite de balayages formés des signaux de réception déterminés pendant une période de balayage est fixé, **caractérisé en ce qu'**un élément d'association de marquage (16) est prévu, lequel forme une contrainte constructive de telle sorte qu'un marquage (18) est associé constructivement à une certaine face réfléchissante (11) et que, par détection du marquage (18) au moyen d'un élément capteur, un signal de marquage pour cette face réfléchissante (11) est généré, au moyen duquel les signaux de réception du balayage des autres faces réfléchissantes (11) sont référencés.

2. Lecteur de code-barres selon la revendication 1, **caractérisé en ce que** l'élément d'association de marquage (16) fait partie de la roue à miroir polygonal (10).

3. Lecteur de code-barres selon la revendication 1, **caractérisé en ce que** l'élément d'association de marquage (16) fait partie d'un composant associé constructivement à la roue à miroir polygonal (10).

4. Lecteur de code-barres selon l'une des revendications 1 à 3, **caractérisé en ce que** le marquage (18) fait partie de l'élément d'association de marquage (16).

5. Lecteur de code-barres selon l'une des revendications 1 à 3, **caractérisé en ce que** le marquage (18) et l'élément d'association de marquage (16) forment des parties séparées.

6. Lecteur de code-barres selon l'une des revendications 1 à 5, **caractérisé en ce que** le signal de marquage fait partie du signal de déclenchement.

**EP 2 587 404 B1**

**7.** Lecteur de code-barres selon l'une des revendications 1 à 6, **caractérisé en ce que** le signal de marquage permet d'étalonner les signaux de réception des balayages des autres faces réfléchissantes (11).

**8.** Lecteur de code-barres selon l'une des revendications 1 à 7, **caractérisé en ce que** le signal de marquage permet de déterminer un ordre univoque des différents balayages.

**9.** Lecteur de code-barres selon l'une des revendications 1 à 8, **caractérisé en ce qu'**il présente une roue à miroir polygonal à balayage (10).

# Fig. 1

# Fig. 1a

15
15
15
15

I

10

# Fig. 1b

19
19
19
19

17

18

16

20
18
17

I

10

# Fig. 1c

# Fig. 2

Trigger- und
Empfangssignale

Markierungssignal

EP 2 587 404 B1

Fig. 3

**IN DER BESCHREIBUNG AUFGEFÜHRTE DOKUMENTE**

**In der Beschreibung aufgeführte Patentdokumente**

- DE 10101985 A1

- DE 102006055992 A1